# EUROPEAN PATENT SPECIFICATION

(11) **EP 1 331 082 B1**
(45) Date of publication and mention of the grant of the patent: **29.09.2010**
(21) Application number: 03002018.4
(22) Date of filing: 28.01.2003
(51) Int. Cl.: B29C 55/16

(54) **Apparatus for stretching a thin film**
Vorrichtung zum Strecken einer dünnen Folie
Dispositif pour l'étirage d'un film mince

(30) Priority: 29.01.2002 JP 2002019352
(43) Date of publication of application: 30.07.2003
(73) Proprietor: Hitachi Industries Co., Ltd., Tokyo 120-8585 (JP)
(72) Inventor: Kunihiro, Tatsuhito Hitachi Industries Co., Ltd.,, Adachi-ku, Tokyo (JP); Takahashi, Kazuo Hitachi Industries Co., Ltd.,, Adachi-ku, Tokyo (JP)
(74) Representative: Beetz & Partner

(56) References cited:
- FR-A- 1 369 733

## Description

The present invention relates to an apparatus for forming a thin film of sheet-like material which supports each of opposite side edges of a sheet-like material at appropriate intervals by clips and moves the respective clips with respect to the opposite side edges to elongate the sheet-like material, thereby making a thin film of the sheet-like material.

Conventional apparatus for making a thin film of a sheet-like material include a structure which winds a sheet-like material around a multistage roll and makes a peripheral speed of the latter stage roller larger than a peripheral speed of the former stage roll to form a thin film of the sheet-like material and transfers the thin film, while elongating the sheet-like material in a longitudinal direction.

Further, there is another prior art which supports each of both side ends (opposite side edges) of a sheet-like material by grasping (sandwiching) it at predetermined intervals with clips and moves the clips by using guide rails as a running path, the guide rails being arranged in such a way as to spread toward a delivery side from an entry side with respect to the center of a machine, to elongate the sheet-like material grasped (sandwiched) by the clips in a width direction of the sheet-like material, thereby making the sheet-like material thin and transferring the thin film.

Still further, there is also a technique which elongates the sheet-like material grasped (sandwiched) by the clips, not only in the width direction of the sheet-like material but also in a longitudinal direction (in a direction of center of a machine) perpendicular to the width direction of the sheet-like material thereby making the sheet-like material thin (refer to JP-B1-4-62530 (Patent No. 1775266), JP-B1-5-23582 (Patent No. 1817497)).

Still further, in contrast to the above-mentioned technique which elongates the sheet-like material in the longitudinal and lateral directions, there is also a technique which elongates the sheet-like material in a slant direction (refer to JP-A-2-113920).

The above-mentioned prior art have the following problems.

In the device using the multistage roll, the peripheral speed of the latter roll is made larger than that of the former roll to elongate the sheet-like material between the rolls in the longitudinal direction due to the frictional resistance between the sheet-like material and the rolls, so that the sheet-like material rubs against the rolls to make countless fine scratches parallel to the direction of transfer of the sheet-like material (in the longitudinal direction) on a whole surface of the sheet-like material.

In the techniques which support the sheet-like material by grasping (sandwiching) it with the clips and elongate the sheet-like material only in the lateral direction, in both the longitudinal and lateral directions or in the slant direction, the adjacent clips are linked to each other or a special-purpose machine using a link mechanism is constructed, so that in a case where it is desired that a length-to-width elongation magnification be changed, a troublesome work of changing specifications such as changing the positions where the guide rails of the running path are fixed and the like are required and further the length-to-width elongation magnification can be changed only within a narrow range or stepwise thereby reducing flexibility.

Therefore, it is an object of the present invention to provide an apparatus for making a thin film of a sheet-like material, which makes little effect on a sheet-like material and can easily change an amount of elongation and a direction of elongation of the sheet-like in a longitudinal direction, in a lateral direction, in both longitudinal and lateral directions, or further in a slant direction and further can change its elongation magnification in a wide range and continuously variably.

In the present invention to accomplish the above-mentioned object the apparatus for forming a thin film of a sheet-like material comprises the features of claim 1.

Further embodiments of the invention are defined in the dependent claims.

Other objects, features and advantages of the invention will become apparent from the following description of the embodiments of the invention taken in conjunction with the accompanying drawings.

### Brief Description of the Several Views of the Drawings

Fig. 1 is a schematic perspective view showing an apparatus for forming a thin film of a sheet-like material in accordance with one embodiment of the present invention;
Fig. 2 is a schematic perspective view showing a state where the sheet-like material is elongated in both longitudinal and lateral directions in the apparatus for forming the thin film of the sheet-like material in accordance with the present invention shown in Fig. 1;
Fig. 3 is a schematic perspective view showing a state where the sheet-like material is elongated in the longitudinal direction in the apparatus for forming the thin film of the sheet-like material in accordance with the present invention shown in Fig. 1;
Fig. 4 is a schematic perspective view showing a state where the sheet-like material is elongated in the lateral direction in the apparatus for forming the thin film of the sheet-like material in accordance with the present invention shown in Fig. 1; and
Fig. 5 is a schematic perspective view showing a state where the sheet-like material is elongated in a slant direction in the apparatus for forming the thin film of the sheet-like material in accordance with the present invention shown in Fig. 1.

### Detailed Description of the Invention

The present invention will be described in detail based on one embodiment shown in the accompanying drawings.

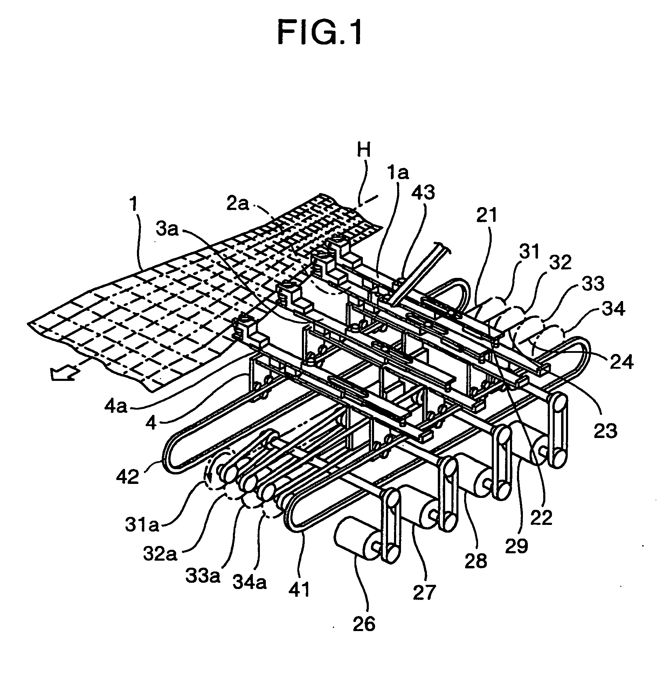

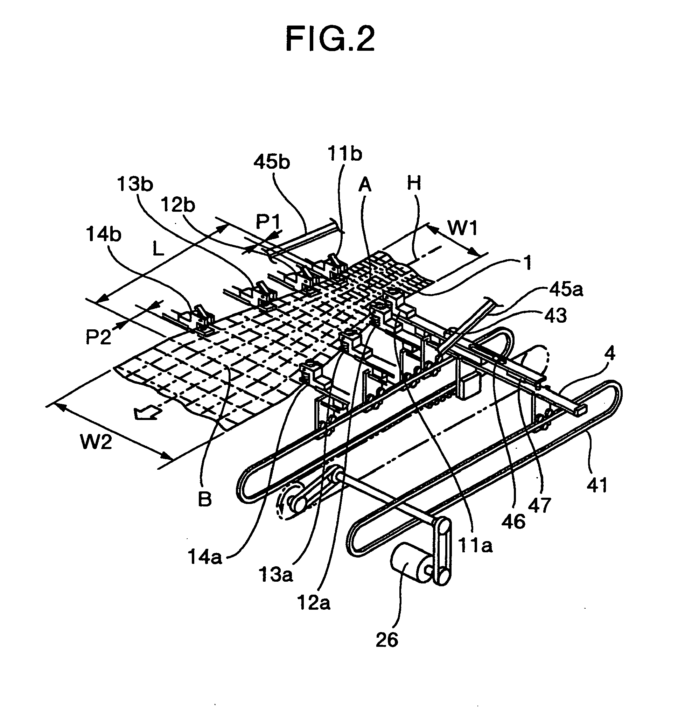

Fig. 1 is a schematic perspective view showing an apparatus for forming a thin film of a sheet-like material in accordance with one embodiment of the present invention (hereinafter simply referred to as the present device). Fig. 2 is a schematic perspective view showing a state where the sheet-like material is elongated in both longitudinal and lateral directions in the present apparatus as shown in Fig. 1.

In both the drawings, a long sheet-like material 1 is carried (transferred) at a constant speed by carrying means, which is not shown, from an upstream side shown at an upper right in each drawing to a downstream side shown at a lower left in each drawing, and a right half of the apparatus and the sheet-like material when viewed from the downstream side is schematically shown.

The actual apparatus is constructed in such a way that it is bilaterally symmetric with respect to a center line H in the direction of transfer of the sheet-like material and that a center line in the direction of length of a machine is aligned with the center line H in the direction of transfer of the sheet-like material.

Left and right ends perpendicular to the direction of transfer of the sheet-like material 1 correspond to the respective opposite side edges of the sheet-like material 1.

In Figs. 1 and 2, reference characters 11a to 14a denote clips for supporting the right end of the sheet-like material 1 by grasping (sandwiching) it at predetermined intervals, and 11b to 14b denote clips for supporting the left end of the sheet-like material 1 by grasping (sandwiching) it at predetermined intervals. Each pair of clips 11a and 11b, 12a and 12b, 13a and 13b, and 14a and 14b pair up at opposite positions in the lateral width direction of the sheet-like material 1 and move at a speed synchronized with the transfer of the sheet-like material 1 in the direction of transfer of the sheet-like material 1 (their driving systems will be later described).

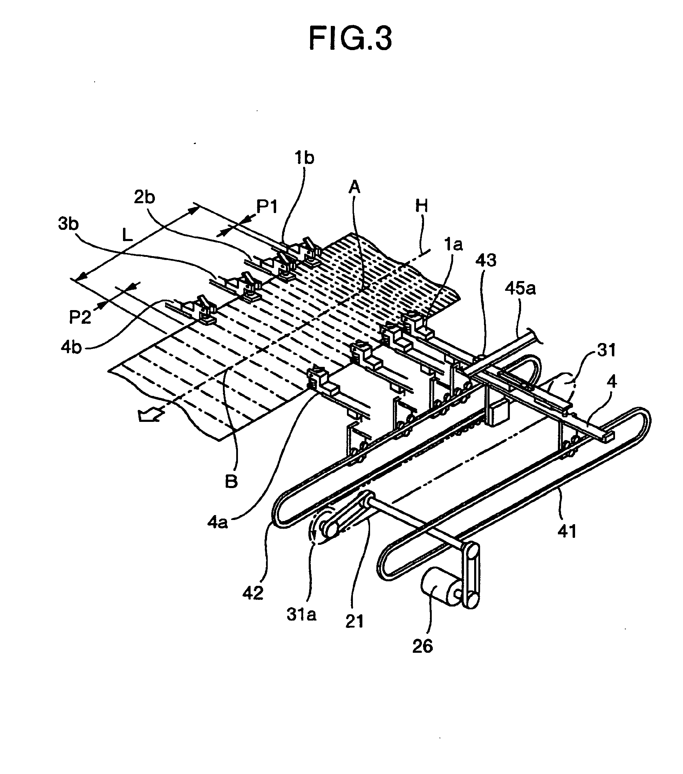

The respective clips 11a to 14a and 11b to 14b are individually mounted on arms 1a to 4a (refer to Fig. 1) and 1b to 4b (refer to Fig. 3) extending in the direction of width of the sheet-like material 1.

For the sake of simplification, constituent members positioned on the right side in the direction of width of the sheet-like material 1 in a state when the upstream side is viewed from the downstream side will be mainly described in the following, and the illustrations and descriptions of the constituent members positioned on the left side in the direction of width of the sheet-like material 1 will be omitted, and as for similar members, the reference characters will be omitted in some cases.

Reference characters 41 and 42 denote endless guide rails on which main moving bodies 4 corresponding to the respective arms 1a to 4a and 1b to 4b are mounted so as to travel thereon. The main moving bodies 4 are movably coupled to the respective arms 1a to 4a by cam followers 46 moving in the elongated holes of the arms 1a to 4a and are adapted to bias, by gas cylinders 47, the respective arms 1a to 4a outward in the direction of width of the sheet-like material 1. The respective main moving bodies 4 are individually mounted on endless chains 21 to 24. These endless chains 21 to 24 are individually circulated by driving sprockets 31a to 34a arranged vertically near an entry side and a delivery side of the sheet-like material 1 (position A and position B shown in Fig. 2), and the respective sprockets 31a to 34a are driven by servomotors 26 to 29 capable of controlling the number of revolutions, and the tensions of the endless chains 21 to 24 can be adjusted by driven sprockets 31 to 34.

A reference character 43 denotes cam followers mounted on the respective arms 1a to 4a.

Reference characters 45a and 45b denote guide members for adjusting motions, in the direction of width of the sheet-like material 1, of the respective clips 11a to 14a and the respective clips 11b to 14b at least from the entry side A to the delivery side B of the apparatus for the sheet-like material 1. These guide members 45a and 45b are constructed such that positions where they are mounted can be freely changed. That is to say, the guide members 45a and 45b are parts of endless rings, and this endless ring is mounted along the above-mentioned respective side edges of the above- mentioned sheet-like material 1, like the endless guide rail 41, with its surface constructed by a ring being arranged vertically. The endless ring is shaped in a straight line, as shown in the drawing, in a region where the sheet-like material 1 is elongated, and its bottom side member of a returning portion at a position corresponding to the guide member 45a or 45b is shaped also in the same straight line as that of the guide member 45a or 45b, and its member folding back at the upstream side and member folding back at the downstream side are shaped in a semicircle, respectively. The top and bottom members each shaped like a straight line, including the guide member 45a or 45b, and the members each shaped like a semicircle and folding back on the upstream side and on the downstream side are coupled to each other with bolts or the like in such a way that they can be bent in a horizontal direction. The top and bottom coupling sections on the upstream side and the top and bottom coupling sections on the downstream side are adapted to be bent by the same amount of bending, respectively.

When the endless rings are bent at the coupling sections of the straight parts of the guide members 45a and 45b and the semicircular returning parts thereof, the side edges of the sheet-like material 1 are elongated or contracted in length in the direction of transfer along the side edges thereof. In this case, it is recommended that the straight members are slidably coupled, at the coupling sections, to the semicircular members by the combination of an elongated hole and a bolt to make the guide rails 41 and 42 equal to the endless rings in length in the direction of transfer along the side edges of the sheet-like material 1, respectively, thereby making the respective arms 1a to 4a and 1b to 4b move smoothly along the endless rings including the guide members 45a and 45b by the cam followers 43 at a time when the main moving bodies 4 corresponding to the respective arms 1a to 4a and 1b to 4b travel.

As will be later described, it is necessary in some cases to make the amount of elongation different in the direction of width of the sheet-like material 1, so it is recommended that in the guide members 45a positioned on the right side in the direction of width of the sheet-like material 1 and the guide members 45b positioned on the left side in the direction of width of the sheet-like material 1 in a state when the upstream side is viewed from the downstream side, the amount of bending of the endless ring including the guide member 45a positioned on the right side in the direction of width of the sheet-like material 1 is independent from the amount of bending of the endless ring including the guide member 45b positioned on the left side in the direction of width thereof.

The cam followers 43 provided on the respective arms 1a to 4a and 1b to 4b are engaged with the vertical side surfaces of the respective endless rings, including the guide members 45a and 45b, on the right and left sides in the direction of width. Thus, when the gas cylinders 47 pull the arms 1a to 4a horizontally outward in the direction of width of the sheet-like material 1 (in Fig. 2, downward in the right direction) to bias the arms 1a to 4a, the guide members 45a or 45b regulate the movement of the respective clips 11a to 14a outward in the direction of width via the respective arms 1a to 4a by the respective cam followers 43.

When the respective main moving bodies 4 are individually moved by the individual servomotors 26 to 29 in the direction of transfer of the sheet-like material 1, the respective cam followers 43 are moved along the guide members 45a and 45b. Since the guide members 45a and 45b are parts of the endless rings, as described above, the respective clips 11a to 14a and 11b to 14b moved along the guide members 45a and 45b by the cam followers 43 are circulated around the endless rings, thereby being returned to the respective original positions.

Since a mechanism for supporting the sheet-like material 1 by grasping (sandwiching) it at the respective clips 11a to 14a and 11b and 14b is known, its description will be omitted.

The respective main moving bodies 4, the respective clips 11a to 14a and 11b and 14b, or the respective servomotors 26 to 29 are mounted along the whole peripheries of the endless guide rails 41 and 42.

The respective clips 11a to 14a and 11b and 14b which release, at the delivery side B of the apparatus, the supporting of the sheet-like material 1 by grasping (sandwiching) it return in sequence to the entry side A of the apparatus and again support the side edges of the sheet-like material 1 by grasping (sandwiching) them. In this case, the gas cylinders 47 return the arms 1a to 4a and 1b to 4b near to the side edges of the sheet-like material 1 to bring the cam followers 43 into contact with the guide members 45a and 45b, respectively.

The operations of the respective members and parts are continuously performed by a program stored in a control unit, which is not shown.

Next, a description will be given of a process of elongating the sheet-like material 1 and forming the thin film of the sheet-like material by the present apparatus.

As shown in Fig. 2, it is assumed that the sheet-like material 1 having a width of W1 at the entry side A of the apparatus be elongated in the direction of width to a width of W2 at the delivery side B.

The guide members 45a and 45b are so slanted as to meet the ratio of a length L from the entry side A to the delivery side B of the apparatus to a difference between the width W1 and the width W2, that is, a length-to-width elongation magnification of the sheet-like material 1.

Since it is necessary only that the cam followers 43 of the respective arms 1a to 4a and 1b to 4b copy the guide members 45a and 45b, the width W2 at the delivery side B is changed by changing the angles of slant of the guide members 45a and 45b. Even when the width W1 at the entry side A of the sheet-like material 1 is changed, it is essential only to change an interval between the guide members 45a and 45b at the entry side A.

In a case where it is desired that the sheet-like material 1 be elongated in both longitudinal and lateral directions, in addition to setting the angles of slant of the guide members 45a and 45b, the servomotors positioned nearer to the downstream side are set at higher driving speeds than the servomotors positioned nearer to the upstream side.

Then, as shown in Fig. 2, a moving pitch in the longitudinal direction per unit time becomes larger from P1 at the entry side A along the direction of transfer to P2 at the delivery side B. In this manner, the sheet-like material 1 is sequentially elongated in the direction of transfer (in the longitudinal direction). The elongation magnification can be freely varied by changing the driving speeds of the servomotors.

In a case where it is desired that the sheet-like material 1 is elongated only in the direction of transfer (in the longitudinal direction), the guide members 45a and 45b are set in parallel to the direction of transfer of the sheet-like material 1 and the servomotors positioned nearer to the downstream side are set at higher driving speeds, as shown in Fig. 3.

Since positional relationships between the respective clips 11a to 14a and the 11b to 14b and the side edges of the sheet-like material 1 are not varied at the entry side A and the delivery side B, respectively, the sheet-like material 1 is not elongated in the direction of width but can be elongated only in the direction of transfer (in the longitudinal direction).

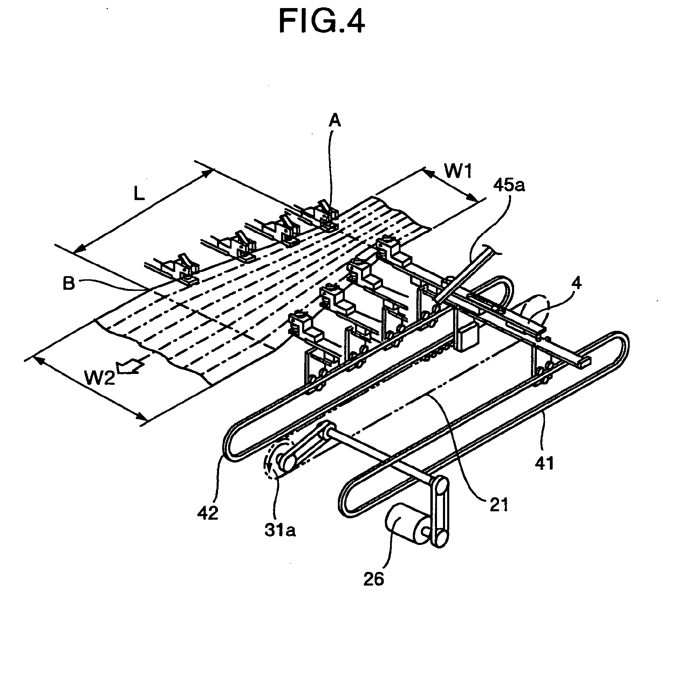

When the respective servomotors 26 to 29 are driven at a uniform speed, the sheet-like material 1 is elongated in the lateral direction. In particular, as shown in Fig. 4, when the respective servomotors 26 to 29 are driven at the uniform speed with the arms being arranged at equal intervals in the direction of transfer, the sheet-like material 1 is uniformly elongated in the lateral direction without being forcibly suddenly elongated at a particular position in accordance with moving to the downstream side.

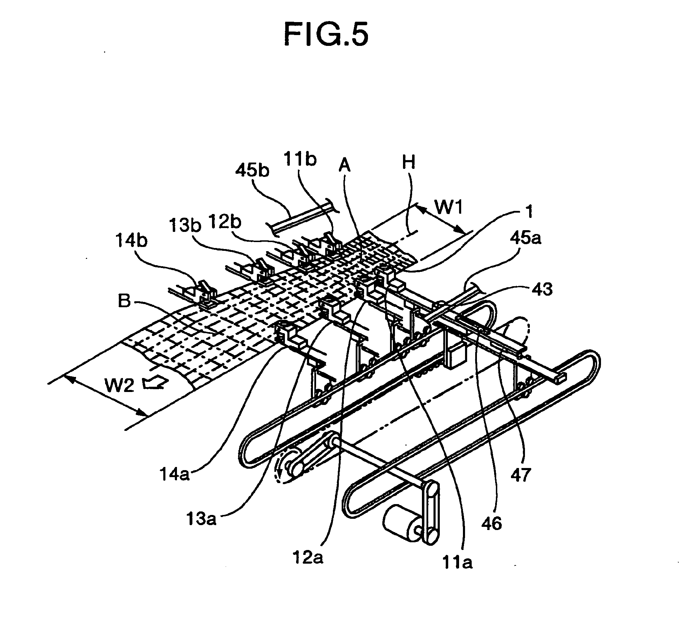

In Fig. 5, the right and left guide members 45a and 45b are made different in the angle of slant from each other. Then, the respective left and right opposite servomotors 12a and 12b, 13a and 13b, and 14a and 14b are set at slightly larger driving speeds on the left side than on the right side in the direction of transfer.

For this reason, the sheet-like material 1 is pulled further strongly on the left downstream side in the direction of transfer than on the right upstream side in the direction of transfer, whereby it is possible to elongate the sheet-like member 1 in a direction slant to the direction of transfer of the sheet-like material 1.

By suitably changing the angles of slant of the right and left guide members 45a and 45b and the driving speeds of the respective right and left opposite clips 11a and 11b, 12a and 12b, 13a and 13b, and 14a and 14b by the respective servomotors, it is also possible to freely change and set the elongation magnification in the slant direction.

In this manner, by leaving the positions where the endless guide rails 41 and 42 and the respective servomotors are fixed as they are and only by changing the angles of slant and setting positions of the right and left guide members 45a and 45b and the driving speeds of the respective clips by the respective servomotors, it is possible to change various kinds of elongations of the sheet-like material 1.

This makes it possible to effectively utilize the almost whole area of the sheet-like material 1 with little effect made on the sheet-like material 1 only to leave marks where the present apparatus supports the sheet-like material 1 by grasping (sandwiching) it with the respective clips on the side edges of the sheet-like material 1.

Since the sheet-like material 1 is so elongated as to follow the guide members 45a and 45b, it is possible to change the elongation magnification in a wide range and continuously variably. Since the driving speeds of the respective servomotors can be also changed continuously variably, it is possible to change the elongation magnification continuously variably by changing the driving speeds of the respective servomotors.

Any driving means may be used as far as the respective driving means can keep the above-mentioned operations.

As described above, according to the present invention, it is possible to provide the apparatus for making the thin film of the sheet-like material which makes little effect on the sheet-like material and can not only easily change the amount of elongation and the direction of elongation of the sheet-like material in the longitudinal direction, in the lateral direction, in both the longitudinal and lateral directions, or further in the slant direction, but also change the elongation magnification within the wide range and continuously variably.

## Claims

1. Apparatus for forming a thin film of a sheet-like material (1) comprising
- a plurality of clips (11 to 14) disposed at appropriate intervals on both side edges of the sheet-like material (1) for grasping the edges of the sheet-like material (1),
- a plurality of moving bodies (4) individually supporting said clips (11 to 14), which clips move with respect to opposite side edges of the sheet-like material (1),
- individual driving sources (26 to 29; 31a to 34a) for moving the respective moving bodies (4) in a direction parallel to the length direction (H) of the sheet-like material (1), and
- guide members (45a, 45b) for regulating the movements of the respective clips (11 to 14) in the width direction of the sheet-like material (1).

2. Apparatus according to claim 1,
**characterized in that**
the moving bodies (4) are individually coupled to a plurality of parallel endless chains (21 to 24) which are individually driven by the driving sources (26 to 29; 31a to 34a).

3. Apparatus according to claim 1 or 2,
**characterized in that**
the clips (11 to 14) are mounted on the moving bodies (4) via individual arms (1a to 4b) which are provided with cam followers (46) moving along the guide members (45a, 45b).

4. Apparatus according to one of the preceding claims,
**characterized in that**
the clips (11 to 14) grasping the side edges of the sheet-like material (1) are moved at speeds synchronized with each other by the driving sources (26 to 29) via the moving bodies (4).

5. Apparatus according to one of the preceding claims,
**characterized in that**
each of the guide members (45a, 45b) is a part of an endless ring provided along each side edge of the sheet-like material (1), surfaces constructed by the ring are vertically arranged, the guide member (45a, 45b) is shaped like a straight line in a region where the sheet-like material (1) is elongated, a member of the endless ring corresponding to the guide member (45a, 45b) is also shaped like a straight line, a return member of the endless ring is shaped like a semicircle, and the straight member and the semicircular member are coupled to each other in such a manner as to be bent, thereby forming the endless ring.

6. Apparatus according to claim 5,
**characterized in that**
the respective endless rings provided along the side edges of the sheet-like material (1) are individually bent.

## Patentansprüche

1. Vorrichtung zum Ausbilden eines dünnen Films aus einem bahnenförmigen Material (1), mit:
- mehreren Klammern (11 bis 14), die in geeigneten Abständen auf beiden Seitenkanten des bahnenförmigen Materials (1) zum Erfassen der Kanten des bahnenförmigen Materials (1) angeordnet sind,
- mehreren beweglichen Körpern (4), die die Klammern (11 bis 14) einzeln tragen, welche Klammern sich bezüglich der gegenüberliegenden Seitenkante des bahnenförmigen Materials (1) bewegen,
- einzelnen Antriebsquellen (26 bis 29; 31a bis 34a) zum Bewegen der jeweiligen beweglichen Körper (4) in eine Richtung, die parallel zur Längsrichtung (H) des bahnenförmigen Materials (1) ist, und
- Führungselementen (45a, 45b) zum Regulieren der Bewegungen der jeweiligen Klammern (11 bis 14) in der Breitenrichtung des bahnenförmigen Materials (1).

2. Vorrichtung nach Anspruch 1,
**dadurch gekennzeichnet, dass**
die beweglichen Körper (4) einzeln mit mehreren parallelen Endlosketten (21 bis 24) gekoppelt sind, die einzeln von den Antriebsquellen (26 bis 29; 31a bis 34a) angetrieben werden.

3. Vorrichtung nach Anspruch 1 oder 2,
**dadurch gekennzeichnet, dass**
die Klammern (11 bis 14) über einzelne Arme (1a bis 4b) an den beweglichen Körpern (4) angebracht sind, die mit Stößeln (46) versehen sind, welche sich entlang der Führungselemente (45a, 45b) bewegen.

4. Verfahren nach irgendeinem der vorhergehenden Ansprüche,
**dadurch gekennzeichnet, dass**
die Klammern (11 bis 14), die die Seitenkanten des bahnenförmigen Materials (1) erfassen, von den Antriebsquellen (26 bis 29) über die beweglichen Körper (4) mit Geschwindigkeiten bewegt werden, die miteinander synchronisiert sind.

5. Vorrichtung nach einem der vorhergehenden Ansprüche,
**dadurch gekennzeichnet, dass**
jedes der Führungselemente (45a, 45b) ein Teil eines Endlosrings ist, der entlang jeder Seitenkante des bahnenförmigen Materials (1) vorgesehen ist, durch den Ring aufgebaute Oberflächen vertikal angeordnet sind, das Führungselement (45a, 45b) in einem Bereich, in dem das bahnenförmige Material (1) ausgedehnt ist, wie eine gerade Linie geformt ist, ein dem Führungselement (45a, 45b) entsprechendes Element des Endlosrings ebenfalls wie eine gerade Linie geformt ist, ein Rückstellelement des Endlosrings wie ein Halbkreis geformt ist und das gerade Element und das halbrunde Element miteinander so gekoppelt sind, dass sie gebogen werden, wodurch sie den Endlosring bilden.

6. Vorrichtung nach Anspruch 5,
**dadurch gekennzeichnet, dass**
die entlang der Seitenkanten des bahnenförmigen Materials (1) vorgesehenen jeweiligen Endlosringe einzeln gebogen sind.

## Revendications

1. Dispositif pour la formation d'un film mince d'un matériau en feuille (1) comprenant
- une pluralité de pinces de fixation (11 à 14) disposées à des intervalles appropriés sur les deux bords latéraux du matériau en feuille (1) pour saisir les bords du matériau en feuille (1),
- une pluralité de corps mobiles (4) supportant individuellement lesdites pinces de fixation (11 à 14), lesquelles pinces se déplacent par rapport aux bords latéraux opposés du matériau en feuille (1),
- des sources d'entraînement individuelles (26 à 29 ; 31a à 34a) permettant de déplacer les corps mobiles respectifs (4) dans une direction parallèle au sens de la longueur (H) du matériau en feuille (1), et
- des éléments de guidage (45a, 45b) permettant de réguler les déplacements des pinces de fixation respectives (11 à 14) dans le sens de la largeur du matériau en feuille (1).

2. Dispositif selon la revendication 1,
**caractérisé en ce que**
les corps mobiles (4) sont couplés individuellement à une pluralité de chaînes sans fin parallèles (21 à 24) qui sont entraînées individuellement par les sources d'entraînement (26 à 29 ; 31a à 34a).

3. Dispositif selon la revendication 1 ou 2,
**caractérisé en ce que**
les pinces de fixation (11 à 14) sont montées sur les corps mobiles (4) au moyen de bras individuels (1a à 4b) qui sont munis de galets de cames (46) se déplaçant le long des éléments de guidage (45a, 45b).

4. Dispositif selon l'une des revendications précédentes,
**caractérisé en ce que**
les pinces de fixation (11 à 14) saisissant les bords latéraux du matériau en feuille (1) se déplacent à des vitesses synchronisées les unes avec les autres par les sources d'entraînement (26 à 29) au moyen des corps mobiles (4).

5. Dispositif selon l'une des revendications précédentes,
**caractérisé en ce que**
chacun des éléments de guidage (45a, 45b) fait partie d'un anneau sans fin disposé le long de chaque bord latéral du matériau en feuille (1), les surfaces formées par l'anneau sont disposées verticalement, l'élément de guidage (45a, 45b) a la forme d'une ligne droite dans une zone où le matériau en feuille (1) est allongé, un élément de l'anneau sans fin correspondant à l'élément de guidage (45a, 45b) a également la forme d'une ligne droite, un élément de retour de l'anneau sans fin a une forme semi-circulaire, et l'élément droit et l'élément semi-circulaire sont couplés entre eux de manière à être courbés, formant ainsi l'anneau sans fin.

6. Dispositif selon la revendication 5,
**caractérisé en ce que**
les anneaux sans fin respectifs disposés le long des bords latéraux du matériau en feuille (1) sont courbés individuellement.
